# FASCICULE DE BREVET EUROPEEN

(11) **EP 3 389 371 B1**
(45) Date de publication et mention de la délivrance du brevet: **08.03.2023**
(21) Numéro de dépôt: 16822422.8
(22) Date de dépôt: 15.12.2016
(51) Int. Cl.: A01K 15/02, A01K 45/00, A01K 31/04, A01K 31/16

(54) **ROBOT MOBILE, NOTAMMMENT D'ÉDUCATION, POUR ÉLEVAGE AVICOLE ET INSTALLATION D'ÉLEVAGE METTANT EN OEUVRE UN OU PLUSIEURS ROBOTS**
MOBILER ROBOTER, INSBESONDERE EIN BILDUNGSROBOTER, FÜR HÜHNERFARM UND ZUCHTANLAGE MIT ANWENDUNG VON EINEM ODER ZWEI ROBOTERN
MOBILE ROBOT, IN PARTICULAR AN EDUCATION ROBOT, FOR POULTRY FARM AND REARING FACILITY IMPLEMENTING ONE OR MORE ROBOTS

(30) Priorité: 15.12.2015 FR 1562425
(43) Date de publication de la demande: 24.10.2018
(73) Titulaire: Tibot, 35510 Cesson-Sevigne (FR)
(72) Inventeur: PLANQUETTE, Lionel, 35580 Guichen (FR)
(74) Mandataire: Vidon Brevets & Stratégie
(86) Numéro de dépôt international: PCT/EP2016/081273
(87) Numéro de publication internationale: WO 2017/102995

(56) Documents cités:
- WO-A2-2014/141313
- US-A- 4 304 194
- US-A1- 2005 217 589
- US-B1- 6 439 162

## Description

### 1. Domaine de l'invention

Le domaine de l'invention est celui de l'aviculture.

Plus précisément, l'invention se rapporte à un robot mobile pour les élevages avicoles destiné à empêcher, ou à tout le moins minimiser, la ponte d'oeufs au sol et à améliorer la fertilité des volailles d'un élevage.

L'invention se rapporte également à une installation d'élevage avicole mettant en oeuvre un ou plusieurs de ces robots.

### 2. L'art antérieur

Les bâtiments d'élevages avicoles comprennent généralement une aire de vie équipée d'abreuvoirs et de mangeoires notamment, et une zone de ponte présentant un nombre de pondoirs, ou nids, qui est fonction du nombre de volailles pondeuses du lot destiné à être élevé dans le bâtiment.

La production d'oeufs débute par une phase d'apprentissage du nid après le transfert des volailles dans le bâtiment et se poursuit pendant plusieurs semaines. Durant cette période critique, les volailles doivent apprendre à pondre uniquement dans les nids, qu'elles doivent considérer comme la zone la plus adaptée pour cela dans le bâtiment.

Toutefois, certaines volailles choisissent d'aller pondre dans d'autres endroits du bâtiment, sur le sol ou sur les caillebotis (en particulier sous les mangeoires ou abreuvoirs, ou bien le long des murs).

Les oeufs pondus en dehors des nids, sur le sol, présentent un aspect sale nécessitant un nettoyage manuel et sont davantage sujets aux contaminations bactériennes. Ces oeufs pondus sur le sol ne peuvent être incubés et doivent être dans certains cas éliminés pour des raisons de risque sanitaire (dans le cas où l'utilisation d'antibiotiques pour prévenir les infections sur les poussins d'un jour est proscrite) ou déclassés.

Au cours de cette phase d'apprentissage, pour éviter la ponte au sol, il est courant de diminuer l'épaisseur de la litière au sol.

En complément, l'éleveur doit se déplacer parmi les volailles, de façon régulière, afin de déranger en douceur ces dernières et les diriger vers les pondoirs.

La réduction du pourcentage de ponte au sol, notamment au cours de la période d'apprentissage des volailles, dépend pour beaucoup de la qualité et de la fréquence des interventions de l'éleveur, qui peut ainsi passer plusieurs heures par jour à éduquer les volailles de son élevage (on note que les passages réguliers de l'éleveur visent également à obliger les volailles qui se cachent ou stagnent en un même endroit à se déplacer de façon à les stimuler et améliorer leur fertilité).

On comprend aisément que ceci génère un surcroît de travail pour l'éleveur qui doit non seulement parcourir à pied l'ensemble des bâtiments de son élevage pour déranger les volailles, mais aussi ramasser les oeufs au sol (les volailles ayant tendance à pondre aux endroits où il y a déjà un oeuf).

La chaleur régnant dans les bâtiments d'élevage, de même que la présence d'ammoniac, de poussière et de bruit, peuvent engendrer des problèmes de santé chez les éleveurs.

En résumé, la ponte au sol a des conséquences néfastes : réduction du nombre d'oeufs répondant aux critères de qualité, travail répétitif et pénible pour l'éleveur, incitation des autres volailles à pondre au sol, perte de productivité et de rentabilité pour l'ensemble des acteurs de la filière (la filière manque actuellement d'oeuf à couver (OAC)).

Malgré les passages fréquents des éleveurs dans les bâtiments pour bouger les volailles, ces dernières ont tendance à s'accoutumer à la présence des éleveurs.

Ainsi, les techniques actuelles qui visent à apprendre aux volailles à pondre uniquement dans les nids et à améliorer leur fertilité ne donnent pas entièrement satisfaction.

Le document WO2014141313 divulgue un véhicule autonome destiné à retirer des animaux morts d'un logement.

### 3. Exposé de l'invention

L'invention ne pose pas ces problèmes liés aux techniques de l'art antérieur pour éduquer les volailles à pondre dans les nids.

En effet, l'invention concerne un robot mobile d'éducation pour un élevage avicole comprenant au moins une zone de ponte, le robot comprenant des moyens de déplacement du robot sur le sol.

Selon l'invention, un tel robot comprend en outre :
- des moyens d'incitation à la mobilité d'au moins deux types distincts pour repousser les volailles présentes au sol vers au moins une zone de ponte,
- des moyens de commande desdits moyens d'incitation à la mobilité, et
- des moyens mécaniques de nivellement et d'aération du sol.

Ainsi, l'invention propose un robot d'éducation selon la revendication 1 qui est particulièrement utile en phase d'apprentissage du nid pour éduquer les volailles à pondre dans les nids, et non pas sur le sol. Un tel robot permet de réduire la pénibilité du travail des éleveurs.

La mise en oeuvre de différents types de moyens d'incitation à la mobilité permet d'empêcher l'accoutumance des volailles à la présence du robot et de ses moyens d'incitation à la mobilité.

La mise en oeuvre des moyens d'entretien (aération) et d'aplanissement du sol permettent d'éviter la formation des zones irrégulières, dites d'abri, qui sont favorisées par les volailles pour la ponte de leurs oeufs. De plus, cela permet de réduire la pénibilité du travail des éleveurs. Enfin, l'aération régulière des sols permet de limiter son taux d'humidité, qui peut être à l'origine de maladies (exemple : dermatite du pied chez le poulet).

Ces moyens mécaniques d'entretien (aération) et d'aplanissement du sol sont destinés à venir au contact du sol et prennent la forme de dents alignées (herse), ou de roues à dents mobiles en rotation.

Dans un mode de mise en oeuvre, le robot mobile suit une trajectoire prédéfinie sur l'ensemble d'un territoire de l'élevage auquel il est associé, ce qui permet de s'assurer qu'il se déplace bien sur l'ensemble de ce territoire et que l'ensemble des volailles sur ce territoire est éduqué.

Par ailleurs, ce déplacement est défini de façon à ce que le robot mobile incite les volailles à se déplacer en direction du pondoir.

Selon un aspect particulier de l'invention, le robot mobile comprend un module de ramassage des oeufs au sol.

Avantageusement, un tel module de ramassage des oeufs au sol comprend :
- une pluralité de disques de préhension des oeufs au sol disposés coaxialement,
- des éléments de guidage des oeufs vers les disques de préhension,
- un bac de stockage des oeufs présentant une paroi de fond inclinée,
- entre deux disques de préhension adjacents, au moins un doigt d'extraction d'un oeuf situé entre les deux disques de préhension vers ledit bac de stockage, et
- entre deux disques de préhension adjacents, au moins un doigt de retenue d'un œuf entre les deux disques de préhension.

Dans un mode de réalisation, les disques sont motorisés et destinés à être situé à distance du sol.

Dans une variante de réalisation, les disques sont en contact du sol et sont entraînés en rotation par le mouvement du robot.

Un tel module de ramassage des oeufs au sol permet d'une part au robot de gagner en polyvalence et d'autre part de réduire la pénibilité du travail des éleveurs.

Par ailleurs, cet agencement particulier du module permet d'assurer le ramassage des oeufs tout en garantissant leur intégrité structurelle.

Selon un aspect particulier de l'invention, de tels moyens d'incitation à la mobilité sont choisis parmi :
- au moins une source sonore ;
- au moins une source lumineuse ;
- au moins un élément mobile mécanique ;
- au moins un dispositif de décharge électrique.

De tels moyens d'incitation à la mobilité constituent des stimuli de natures différentes qui sont simples à mettre en oeuvre et peu coûteux.

L'élément mobile mécanique peut être un bras articulé, un drapeau mis en mouvement par des moyens d'agitation, un disque tournant, ou tout autre dispositif mécanique mobile permettant d'éduquer des volailles. Le dispositif de décharge électrique permet de délivrer, par contact avec une volaille, des décharges électriques de faible intensité.

Le robot peut ainsi mettre en oeuvre une ou plusieurs sources lumineuses, fixes ou clignotantes (de type LED par exemple) à couleur et fréquence changeantes. Dans une variante, une combinaison de sources lumineuses de différentes couleurs peut être mises en oeuvre.Un seul ou plusieurs des moyens d'incitation à la mobilité peuvent être activés à la fois.

Selon l'invention, les séquences successives d'activation des moyens d'incitation à la mobilité ne sont pas identiques, de façon à éviter que les volailles ne s'habituent à la présence du robot.

En fonction du degré d'accoutumance des volailles, ces moyens d'incitation à la mobilité peuvent ne plus être activés, pendant une période plus ou moins longue (notamment à l'issue de la période d'apprentissage). Le robot peut toutefois être utilisé pour assurer des fonctions secondaires décrites ci-après.

Selon un aspect particulier de l'invention, les moyens de commande sont configurés pour activer les moyens d'incitation à la mobilité d'au moins deux types distincts les uns après les autres ou simultanément.

Selon un aspect particulier de l'invention, un tel robot comprend des moyens de géolocalisation du robot.

Ces moyens de géolocalisation du robot permettent de déterminer la position précise du robot au sein de la zone de vie et de s'assurer que la trajectoire du robot respecte le plus précisément possible la trajectoire théorique programmée.

Selon un aspect particulier de l'invention, un tel robot comprend des capteurs de mesure de paramètres environnementaux de l'élevage avicole, et en particulier d'un bâtiment d'élevage lorsque l'élevage est en intérieur.

Ces capteurs permettront de réaliser une cartographie des paramètres environnementaux sur l'ensemble du bâtiment d'élevage.

Pour ce faire, le robot comprend des moyens de traitement aptes à délivrer une cartographie des paramètres environnementaux de l'élevage avicole en fonction des paramètres environnementaux mesurés.

En particulier, les paramètres environnementaux mesurés sont choisis parmi :
- la température ambiante;
- la pression ;
- l'hygrométrie ;
- le taux de dioxyde de carbone ;
- le taux d'ammoniac.

Les bâtiments d'élevage, dans le cas d'élevages avicoles en intérieur, doivent répondre à des critères environnementaux relatifs aux taux d'ammoniac et de dioxyde de carbone, à l'hygrométrie, à la température ambiante et à la pression notamment. La mesure de ces paramètres par le robot permet de détecter une situation anormale nécessitant l'intervention d'un sujet humain.

La mise en oeuvre de ces capteurs des paramètres environnementaux visent à améliorer le bien être animal et à économiser les ressources naturelles, notamment dans le cadre de l'amélioration des litières (économie sur les copeaux de bois, le gaz,...) par l'aération de celles-ci mais aussi par les mesures de température et d'humidité.

Selon un aspect particulier de l'invention, un tel robot comprend des capteurs de mesure de paramètres physiologiques des volailles.

En particulier, le robot comprend un capteur de mesure de la température corporelle.

Le robot selon l'invention peut ainsi mesurer sans contact la température corporelle des volailles.

La mise en oeuvre de ce type de capteur vise à améliorer le bien-être animal.

Selon un aspect particulier de l'invention, un tel robot comprend des capteurs d'acquisition d'informations visuelles et/ou sonores.

Il peut s'agir notamment d'un appareil photo, d'une caméra vidéo, d'un microphone.

Selon un aspect particulier de l'invention, un tel robot comprend des moyens de traitement des paramètres mesurés et/ou des informations visuelles et/ou sonores acquises aptes à délivrer une cartographie des volailles mortes et/ou des oeufs pondus au sol.

Ces moyens de traitement mettent en oeuvre un logiciel de cartographie permettant d'illustrer sur une représentation graphique de l'élevage la position des volailles mortes et des oeufs présents au sol.

Un tel logiciel peut éventuellement fournir des données statistiques sur ces aspects.

Selon un aspect particulier de l'invention, un tel robot comprend des moyens de communication sans fil aptes à transmettre les paramètres mesurés et/ou les informations visuelles acquises et/ou les informations sonores acquises vers un site distant.

La cartographie des volailles mortes et des oeufs présents au sol, ainsi que les données statistiques, peuvent être transmises par le robot vers un site distant.

Selon un aspect particulier de l'invention, un tel robot comprend des moyens de détermination d'une anomalie parmi les paramètres mesurés, les informations visuelles acquises et les informations sonores acquises, et des moyens de génération d'une alarme destinée à être transmise vers un site distant par le biais des moyens de communication.

Une telle alarme peut être transmise à l'éleveur ou encore à un vétérinaire. L'invention se rapporte également une installation d'élevage avicole comprenant au moins un robot selon la revendication 1.

### 4. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 est une vue schématique, de dessus, d'un bâtiment d'élevage avicole dans lequel est mis en oeuvre un robot mobile conforme à l'invention ;
- la figure 2 est une représentation schématique d'un robot mobile conforme à l'invention ;
- la figure 3 est une vue, en perspective, d'un module de ramassage des oeufs au sol d'un robot conforme à l'invention ;
- la figure 4 est une vue, de profil, du module de ramassage des oeufs au sol de la figure 3 ;
- les figures 5A et 5B sont des vues en perspective et de dessus d'un robot mobile selon un premier mode de réalisation de l'invention mettant en oeuvre des moyens mécaniques de nivellement et d'aération du sol d'un premier type ;
- les figures 6A et 6B sont des vues en perspective et de dessus d'un robot mobile selon un deuxième mode de réalisation de l'invention mettant en oeuvre des moyens mécaniques de nivellement et d'aération du sol d'un deuxième type.

### 5. Description détaillée de l'invention

### 5.1 Rappel du principe de l'invention

Le principe général de l'invention repose sur un robot mobile autonome qui est configuré pour « éduquer » les volailles d'un élevage à pondre dans les nids et les faire bouger.

Ce robot comprend plusieurs types de moyens d'incitation à la mobilité de façon à minimiser la ponte d'oeufs au sol tout en évitant, ou à tout le moins minimisant, le phénomène d'accoutumance des volailles à la présence du robot, en particulier durant la période d'apprentissage du nid.

L'éducation des volailles par le robot permet en outre de stimuler les volailles statiques de façon à optimiser leur fertilité.

Ce robot comprend en outre des moyens mécaniques de nivellement et d'aération du sol, recouvert de litière (copeaux de bois, paille,..), tels qu'un râteau ou une herse.

De tels moyens mécaniques permettent d'éviter la formation de zones d'abri qui incitent la ponte d'oeufs au sol, de réduire la pénibilité du travail des éleveurs, de limiter le taux d'humidité du sol, qui peut être à l'origine de maladies (exemple : dermatite du pied chez le poulet).

Par ailleurs, l'utilisation d'un outil d'aération de la litière permet d'augmenter sa durée d'utilisation et donc de limiter son renouvellement (impact économique).

Par ailleurs, ce robot peut comprendre un dispositif de ramassage des oeufs au sol.

### 5.2 Description détaillée d'un mode de réalisation

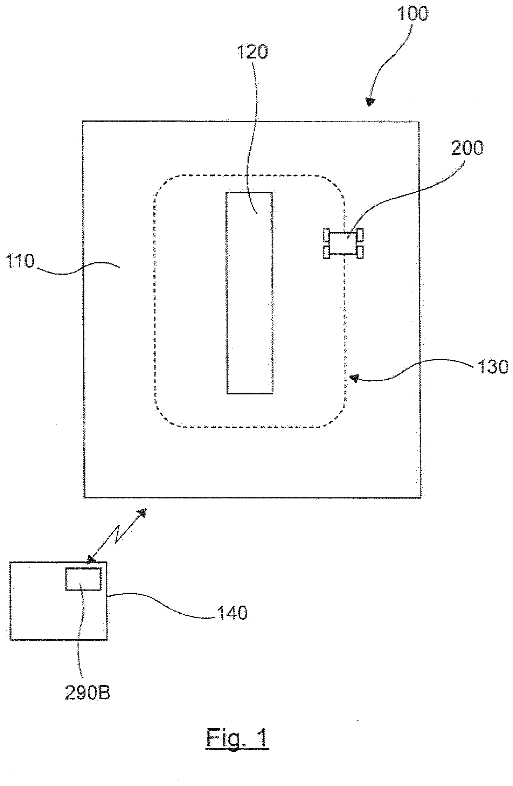

La figure 1 est une vue schématique, de dessus, d'un bâtiment d'élevage avicole 100 pour un lot de volailles pondeuses. Le bâtiment d'élevage avicole 100 comprend un sas sanitaire (non représenté), une zone de vie 110 dans laquelle sont disposés des perchoirs, abreuvoirs et des mangeoires notamment, et une zone de ponte 120 comprenant un nombre de pondoirs fonction du nombre de volailles de l'élevage. Le ramassage des oeufs peut se faire manuellement, ou par le biais d'un tapis roulant, ou convoyeur (non représenté).

Un robot 200 conforme à l'invention est apte à se déplacer dans la zone de vie 110 afin d'empêcher notamment la ponte d'oeufs au sol par éducation des volailles (on peut prévoir plusieurs robots dans la zone de vie 110).

On a représenté de façon schématique une trajectoire 130, parmi plusieurs trajectoires possibles, suivie par le robot 200 lorsque ce dernier est mis en mouvement.

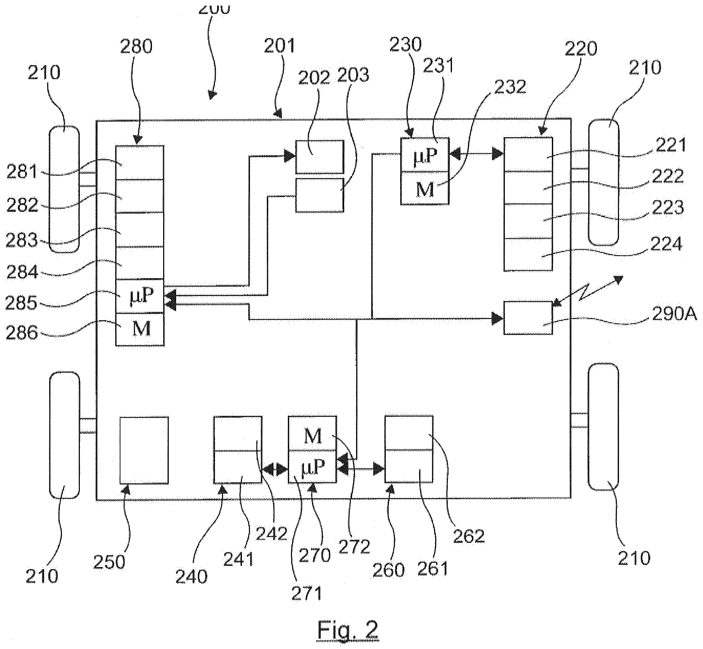

Le robot 200 porte des moyens de communication 290A sans fil (figure 2) comprenant des moyens de transmission de données et des moyens de réception de données.

On a également représenté sur la figure 1 un local 140 qui est situé à distance du bâtiment d'élevage avicole 100. Il peut s'agir d'une annexe du bâtiment d'élevage avicole 100, ou bien d'un lieu de travail ou d'un lieu de vie d'un éleveur ou d'un vétérinaire qui est relativement éloigné du bâtiment d'élevage avicole 100.

Le local 140 est équipé de moyens de communication 290B (un ordinateur portable, un téléphone mobile ou une tablette tactile, par exemple) destinés à communiquer notamment avec le robot 200, comme cela sera décrit plus en détail par la suite. Les moyens de communication 290B comprennent des moyens de transmission de données et des moyens de réception de données. Des données peuvent ainsi être échangées entre les moyens de communication 290A et 290B par le biais d'une liaison Wi-Fi (marque déposée), Bluetooth (marque déposée), SIGFOX (marque déposée), LoRa (marque déposée) ou par ondes radioélectriques.

La figure 2 est une représentation schématique d'un robot 200 conforme à l'invention qui peut se déplacer sur le sol de la zone de vie 110 du bâtiment d'élevage 100.

Le robot 200 comprend un châssis 201 portant des roues, à savoir deux roues 210 avant et deux roues 210 arrière, montées sur les côtés du châssis 201, un moteur d'entraînement 202 des roues 210, et une source d'énergie 203 sous la forme d'une ou plusieurs batterie(s) électriques.

Le robot peut être équipé de trois roues ou plus. D'autres moyens de déplacement, tels que des chenilles ou des jambes articulées, et d'autres sources d'énergie peuvent être mis en oeuvre.

### Déplacement du robot

Dans l'exemple illustré sur la figure 1, le robot 200 est programmé pour suivre une trajectoire 130 prédéterminée grâce notamment à des moyens de guidage et de navigation 280 comprenant :
- un ou plusieurs capteurs inertiels 281 (accéléromètres, gyromètres...), un magnétomètre 282, et des moyens de géolocalisation 284 (par radiofréquences, laser ou par satellite (GPS)),
- un ou plusieurs capteurs à ultra-sons 283 (ou optique ou à infra-rouge) destinés à détecter un obstacle fixe (seau, poule morte) ou mobile (poule),
- un premier microprocesseur 285 connecté au moteur d'entraînement des roues, et
- un premier bloc mémoire 286 relié au premier microprocesseur 285.

Les moyens de guidage et de navigation 280 pilotent, à partir des signaux issus des capteurs 281 à 284, le mouvement des roues 210 du robot 200.

Lorsque un obstacle est détecté par les capteurs à ultra-sons 283, les moyens de guidage et navigation 280 pilotent le mouvement des roues 210 du robot 200 de façon à contourner l'obstacle (manoeuvre d'évitement).

Une fois l'obstacle contourné, le robot 200 poursuit son parcours le long de la trajectoire 130.

### Fonction d'incitation à la mobilité

Pour inciter à la mobilité les volailles au sein de leur zone de vie 110 de manière efficace, le robot 200 met en oeuvre plusieurs types de moyens d'incitation à la mobilité 220 qui sont activés par des moyens de commande 230. Ces moyens de commande 230 comprennent un deuxième microprocesseur 231 qui est apte à délivrer des signaux de commande aux actionneurs respectifs des moyens d'incitation à la mobilité 221 à 224.

Ces moyens d'incitation à la mobilité 220 comprennent, dans l'exemple illustré, au moins une source sonore 221, au moins une source de lumière 222, au moins un élément mobile mécanique, tel qu'un bras mécanique articulé 223, et au moins un dispositif de décharge électrique 224 de faible intensité.

Ces moyens d'incitation à la mobilité 221 à 224 délivrent ainsi des stimuli de nature différente (sonore, lumineux, mécanique et électrique, respectivement).

Les moyens de commande 230 sont configurés pour d'une part activer ou désactiver chacun des moyens d'incitation à la mobilité 221 à 224 et, d'autre part, contrôler les paramètres (intensité, fréquence,...) des stimuli délivrés.

Les moyens de commande 230 permettent notamment de contrôler les mouvements du bras mécanique articulé 223, en vitesse et en position notamment.

D'autres types de moyens d'incitation à la mobilité peuvent être mis en oeuvre sans pour autant sortir du cadre de l'invention.

A titre d'exemple, l'extrémité libre du bras mécanique articulé 223 peut être équipée d'un dispositif d'émission sonore et/ou de lumière afin de pouvoir orienter au mieux la direction de transmission des stimuli par rapport aux volailles se présentant face au robot 200.

Afin d'empêcher le phénomène d'accoutumance des volailles à la présence du robot 200 et, en particulier, aux stimuli des moyens d'incitation à la mobilité 220 portés par le robot 200, les moyens de commande 230 peuvent être programmés (un ou plusieurs programmes pouvant être stockés dans une mémoire de stockage 232) pour actionner les moyens d'incitation à la mobilité 220 selon des séquences variées (les uns après les autres, en combinaison ou non, de façon périodique ou non), à des intensités et fréquences variables, de manière prédéterminée, aléatoire ou pseudo-aléatoire, tout au long du déplacement du robot 200 le long de la trajectoire 130.

On peut prévoir plusieurs sources lumineuses de couleurs différentes.

On peut prévoir, par ailleurs, une unique séquence d'activation des moyens d'incitation à la mobilité 220 qui est répétée tout au long du déplacement du robot 200.

Enfin, on peut prévoir que les moyens d'incitation à la mobilité 220 ne soient activés que lorsque le robot 200 détecte la présence d'une ou plusieurs volailles dans un périmètre prédéterminé autour du robot 200 (par le biais des informations visuelles collectées par le module d'acquisition 260, par exemple).

L'aspect programmable des moyens de commande 230 offre une certaine flexibilité dans la commande des moyens d'incitation à la mobilité 220. En fonction des résultats obtenus (pourcentage de ponte au sol, fertilité des volailles, réaction des volailles aux stimuli), un sujet humain peut reprogrammer le robot 200 pour modifier la ou les séquences d'activation des moyens d'incitation à la mobilité 220.

Cette reprogrammation peut être effectuée à distance, et notamment à partir des moyens de communication 290B du local 140 qui sont aptes à communiquer avec les moyens de communication 290A du robot 200.

Il est préférable que les moyens d'incitation à la mobilité 220 soient disposés sur le devant et/ou le dessus du robot 200.

### Fonction de ramassage des œufs

Dans un mode de réalisation particulier, le robot 200 comprend en outre un module de ramassage des oeufs 300 au sol.

Pour des raisons de clarté, le module de ramassage des oeufs 300 est représenté indépendamment du robot 200. On comprend toutefois qu'un tel module de ramassage des oeufs 300 est solidarisé de façon fixe au châssis du robot 200, ou de manière amovible, notamment par le biais de moyens d'encliquetage réversibles.

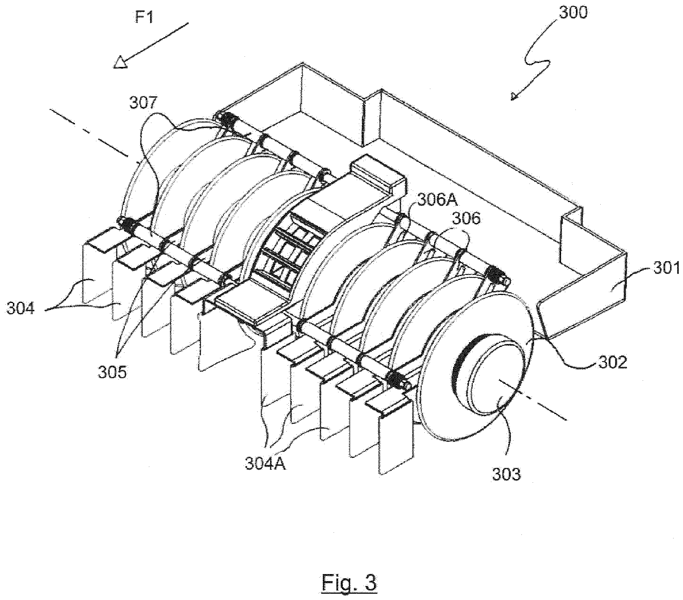

Tel qu'illustré sur la figure 3, le module de ramassage des oeufs 300 comprend un bac de stockage 301 des oeufs. Dans cet exemple, le bac de stockage 301 des oeufs est situé à l'arrière du module de ramassage des oeufs 300, les oeufs situés sur le sol étant dirigés vers le bac de stockage 301 par le biais de moyens de ramassage des oeufs au sol.

Ces derniers comprennent un arbre 303 sur lequel sont agencés des disques 302 de préhension des oeufs, ces disques 302 étant coaxiaux et espacés les uns des autres. La largeur des espaces successifs entre les disques 302 de préhension est déterminée en fonction de la dimension des oeufs. Les oeufs situés sur sol sont donc dirigés dans un espace situé entre deux disques 302 de préhension adjacents, maintenus puis soulevés du sol par les surfaces en regard de ces deux disques 302 de préhension de sorte à être dirigés dans le bac de stockage 301.

Chaque espace entre deux disques 302 de préhension adjacents comprend des doigts d'extraction 306, s'étendant de façon inclinée par rapport à la verticale, pour permettre l'évacuation des oeufs "pincés" entre deux disques 302 de préhension vers le bac de stockage 301, et des doigts de retenue 305 s'étendant horizontalement pour bloquer le déplacement des oeufs vers le bas lorsque le robot 200 recule, de sorte à ce que les oeufs ne tournent pas avec les disques 302 de préhension et retombent sur le sol.

Dans cet exemple, étant donné que le bac de stockage 301 est situé à l'arrière du module de ramassage des oeufs 300, les doigts d'extraction 306 sont également situés entre les disques 302 de préhension et le bac de stockage 301.

Les doigts d'extraction 306 et les doigts de retenue 305 sont montés sur des axes horizontaux et espacés par des cales 307.

Le module de ramassage des oeufs 300 comprend en outre une pluralité de moyens de guidage 304 des oeufs, prenant la forme de plaques verticales disposées dans le prolongement de la surface des disques 302 de préhension.

Ainsi, chaque moyen de guidage 304 est aligné avec un disque 302 de préhension de sorte à orienter les oeufs au sol vers les espaces situés entres les disques 302 de préhension et éviter que ces derniers roulent sur les oeufs.

Tout ou partie de chaque moyen de guidage 304 est recouvert d'une couche 304A de matériau souple apte à amortir les chocs lorsque le moyen de guidage 304 entre en contact avec un oeuf.

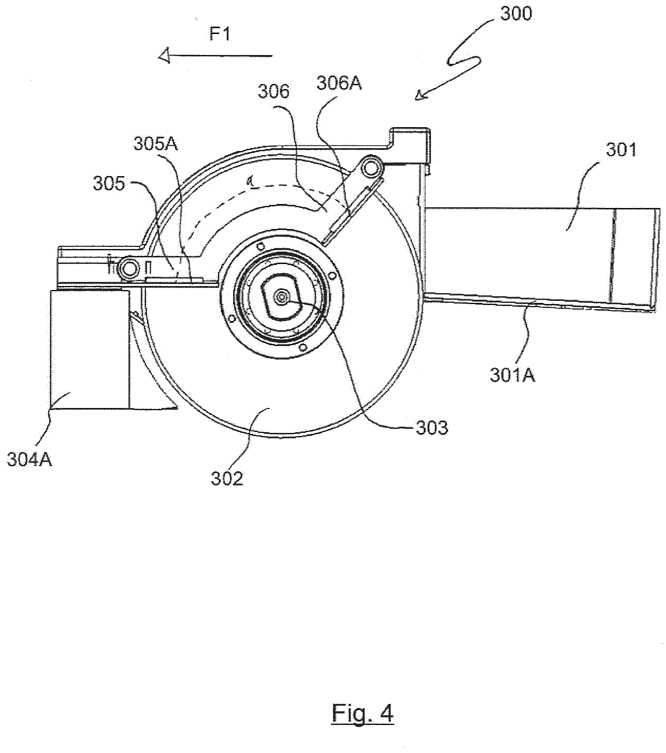

Comme illustré sur la figure 4, la paroi de fond 301A du bac de stockage 301 est inclinée.

Cette forme particulière permet dans un premier temps de déplacer, par roulement, les oeufs vers le fond du bac de stockage 301 et dans un second temps, de minimiser leur liberté de mouvement lorsque le robot se déplace.

Comme cela est visible sur la figure 4, les doigts d'extraction 306 et de retenue 305 comprennent chacun, au moins sur la surface potentiellement en contact avec les oeufs, des éléments de protection 305A, 306A.

De tels éléments de protection 305A, 306A permettent d'amortir les chocs et ainsi de garantir l'intégrité structurelle des oeufs lorsqu'ils entrent en contact avec les doigts d'extraction 306 ou de retenue 305.

En outre, pour chaque espace défini entre deux disques 302 de préhension adjacents, le doigt d'extraction 306 et le doigt de retenue 305 sont espacés d'un angle α d'une valeur comprise entre 120° et 150°, de préférence autour de 135°.

On décrit par la suite le fonctionnement du module de ramassage des oeufs 300 en relation avec les figures 3 et 4.

Lorsque le robot 200 avance, dans la direction de la flèche F1, les disques 302 de préhension sont entraînés en rotation dans le sens inverse des aiguilles d'une montre, soit par un élément motorisé (les disques 302 de préhension n'étant pas en contact avec le sol), soit par la liaison établie entre les disques 302 de préhension et le sol (les disques 302 de préhension n'étant pas motorisé mais étant entraînés en rotation par le mouvement du robot).

De préférence, les disques 302 de préhension sont mécaniquement solidaires en rotation au moins par paire.

Lorsque le module de ramassage des oeufs 300 entre en contact avec un oeuf, si celui-ci n'est pas axé avec l'espace formé entre deux disques 302 de préhension adjacents, il entre en contact avec un élément de guidage 304 qui le dirige vers un espace situé entre deux disques 302 de préhension.

Ensuite, l'œuf entre en contact avec deux disques 302 de préhension adjacents qui sont entraînés en rotation. Les disques 302 de préhension s'écartent légèrement et maintiennent l'œuf bloqué.

Le mouvement de rotation des deux disques 302 de préhension adjacents permet de déplacer l'œuf de bas en haut dans un mouvement circulaire par rapport à l'arbre 303.

Lorsque l'œuf arrive au niveau du bac de stockage 301, l'œuf entre en contact avec un doigt d'extraction 306. Le mouvement de rotation des disques 302 de préhension entraîne le glissement de bas en haut de l'œuf contre l'élément de protection 306A du doigt d'extraction 306 et son évacuation vers le bac de stockage 301.

Une fois dans le bac de stockage 301, l'œuf est entraîné vers le fond du bac de du fait que la paroi de fond 301A est inclinée.

Lorsque le bac de stockage 301 est rempli, le robot 200 peut être configuré pour déposer le contenu du bac de stockage 301 dans une zone spécifique de l'élevage.

Eventuellement, si le robot 200 est amené à reculer alors qu'un oeuf est maintenu bloqué entre deux disques 302 de préhension adjacents, le doigt de retenue 305 permet d'éviter que l'œuf ne retombe sur le sol.

Les disques 302 de préhension peuvent être positionnés parallèlement à la trajectoire du robot 200 ou orientés selon un ou plusieurs angles prédéfinis permettant de couvrir une surface de ramassage plus importante.

Les disques 302 de préhension peuvent être entraînés en rotation mécaniquement ou électriquement. Leur vitesse ainsi que leur sens de rotation peut être régulée et être indépendante de la vitesse d'avance du robot 200.

### Autres aspects et fonctions

Le robot 200 permet, en complément de sa fonction d'éducation des volailles, d'assurer une ou plusieurs autres fonctions au sein de la zone de vie 110.

Le robot 200 comprend ainsi des moyens mécaniques 250 de nivellement et d'aération du sol de la zone de vie 110, et en particulier de la litière, mettant en oeuvre un râteau ou une herse par exemple.

En effet, les irrégularités du sol peuvent former des zones perçues comme des zones d'abri par les volailles, notamment dans les recoins de la zone de vie 110, ce qui peut inciter les volailles à pondre dans ces zones d'abri plutôt que dans les nids.

Les moyens mécaniques 250 de nivellement et d'aération du sol sont : indépendants du robot 200 (c'est-à-dire qu'ils sont fixés de façon réversible au robot de sorte qu'ils soient démontables) et tractés par le robot 200, par exemple.

Ainsi, pour cette version tractée, le robot 200 peut être utilisé pour porter différents outils interchangeables et mettre en oeuvre un système de reconnaissance de l'outil tracté (du type sans contact, par exemple, mettant en oeuvre une puce RFID). Cela permet au robot 200 de reconnaitre l'outil qu'il tracte et donc d'adapter son programme (trajectoire, vitesse) au besoin.

Ces moyens mécaniques 250 comprennent des moyens de positionnement de l'outil de nivellement et d'aération du sol. Ces moyens de positionnement, qui sont manuels ou motorisés, comprennent un axe ou une glissière leur permettant de passer d'une position active où ils sont en contact avec le sol (litière) à une position inactive où ils sont positionnés à distance du sol (pendant une manoeuvre ou un cycle sans entretien de la litière), et vice versa.

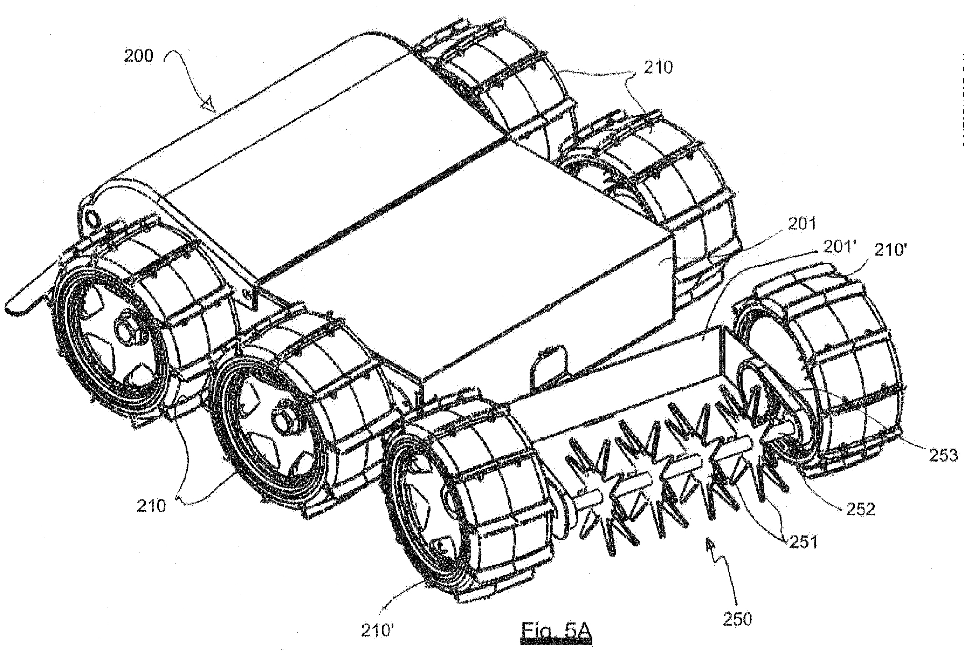

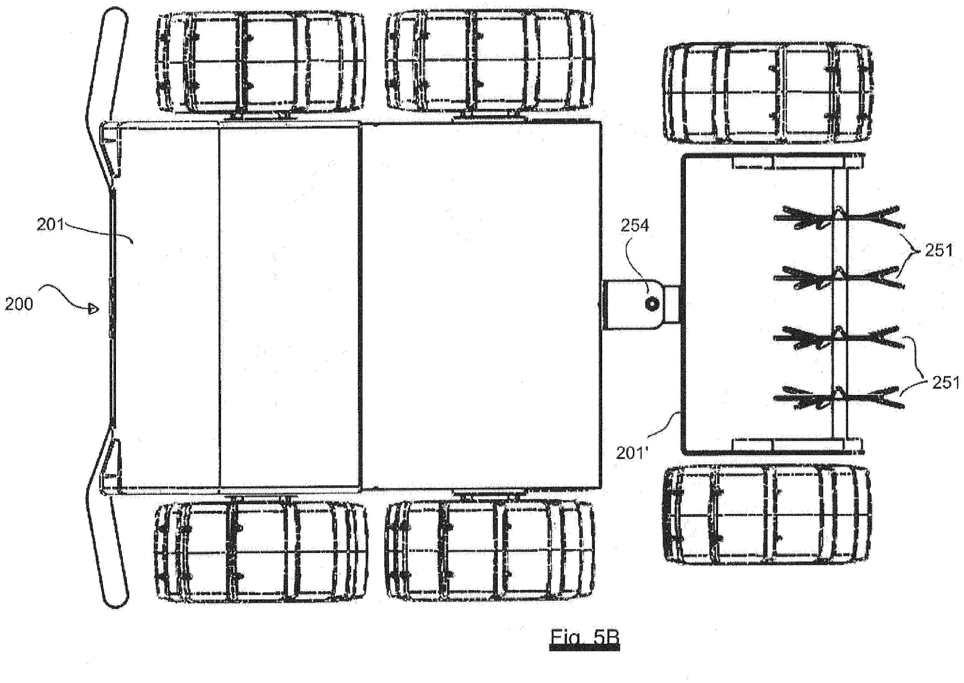

Les figures 5A et 5B sont des vues en perspective et de dessus d'un robot mobile selon un premier mode de réalisation de l'invention mettant en oeuvre des moyens mécaniques 250 de nivellement et d'aération du sol d'un premier type.

Le robot 200 comprend un châssis 201 principal portant quatre roues 210 montées sur les côtés du châssis 201.

Les moyens mécaniques 250 de nivellement et d'aération du sol sont ici tractés et sont montés sur un châssis 201' secondaire portant une roue 210' sur chacun de ses côtés. Plus précisément, le châssis 201' secondaire est monté de façon démontable, via une liaison articulée 254, au châssis 201 principal du robot 200.

Les moyens mécaniques 250 de nivellement et d'aération du sol (de la litière en particulier) prennent ici la forme de roues à dents 251 qui sont montées espacées sur un axe rotatif 252.

L'axe rotatif 252 est entraîné en rotation à ces deux extrémités par des moyens d'entraînement 253 comprenant des engrenages coopérant avec une courroie crantée.

On constate que c'est le mouvement des roues 210 arrière du robot 200 qui entraîne l'axe rotatif 252, et donc les roues à dents 251, en rotation.

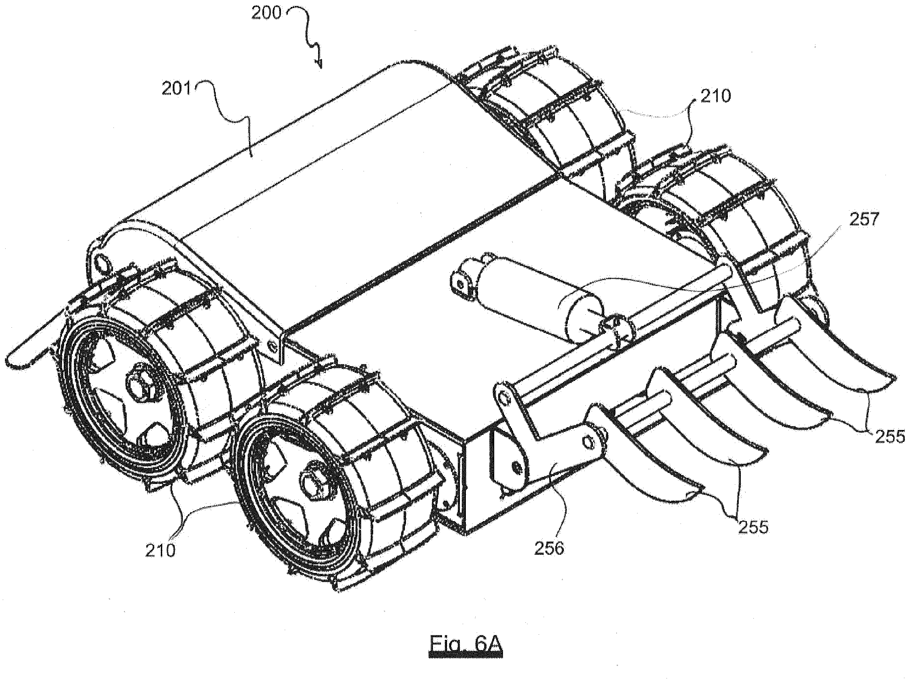

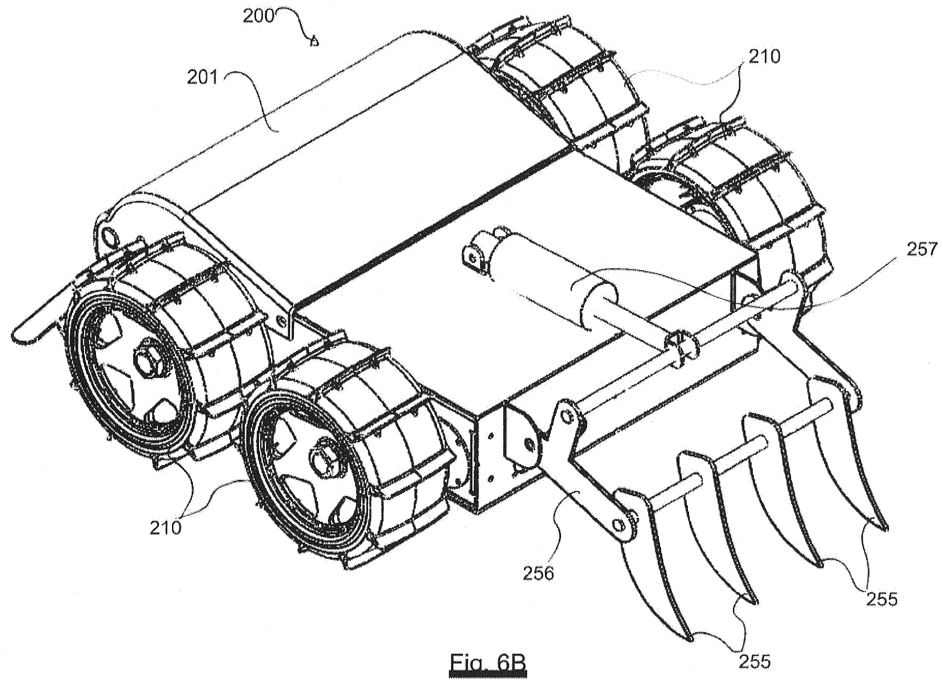

Les figures 6A et 6B sont des vues en perspective et de dessus d'un robot mobile selon un deuxième mode de réalisation de l'invention mettant en oeuvre des moyens mécaniques de nivellement et d'aération du sol d'un deuxième type.

Le robot 200 comprend ici un châssis 201 portant quatre roues 210 montées sur les côtés du châssis 201.

Les moyens mécaniques 250 de nivellement et d'aération du sol (de la litière en particulier) sont ici portés par le châssis et prennent ici la forme de dents 255 qui sont montées espacées sur un support 256. Ce dernier est monté de façon pivotante sur le châssis 201 et est actionné, manuellement ou de manière motorisé, par le biais d'un vérin 257 monté sur le châssis 201.

Sur la figure 6A, le support 256 est en position relevée (ou inactive) et sur la figure 6B, le support 256 est en position de "travail", les dents 255 étant au contact du sol.

Le robot 200 peut comprendre, par ailleurs, un module de mesure 240 comprenant un ou plusieurs capteurs de mesure 241 de paramètres environnementaux du bâtiment d'élevage 100, et un ou plusieurs capteurs de mesure 242 de paramètres physiologiques des volailles.

Les capteurs de mesure 241 de paramètres environnementaux sont notamment destinés à mesurer la température, la pression, l'hygrométrie, ainsi que le taux d'ammoniac et de dioxyde de carbone.

De façon avantageuse, les paramètres environnementaux sont mesurés à la hauteur du robot 200, soit relativement proche du sol, et en de multiples endroits de la zone de vie 110.

Cela permet d'obtenir une cartographie relativement précise et en temps réel de divers paramètres environnementaux au sein de la zone de vie 110 sur la base des données de géolocalisation délivrées par les moyens de géolocalisation 284.

Les capteurs de mesure 242 des paramètres physiologiques des volatiles, tels que leur température corporelle, peuvent comprendre un thermomètre infrarouge. Cela permet de détecter ou de confirmer la présence d'une poule morte, par exemple.

Le robot 200 peut comprendre, en outre, un module d'acquisition 260 comprenant un appareil de prise de vue 261, tel qu'une caméra vidéo ou un appareil photographique, et un microphone 262.

Les informations visuelles et sonores collectées permettent notamment de détecter d'éventuelles anomalies dans le bâtiment d'élevage avicole 100 ou dans le comportement des volailles. Elles permettent en particulier de détecter la présence de volailles mortes et/ou d'oeufs sur le sol.

Les paramètres mesurés par le module de mesure 240 et les informations visuelles et sonores collectées par le biais du module d'acquisition 260 peuvent être stockés dans une mémoire de stockage 272 du robot 200, et transmis par le biais des moyens de communication 290A sans fil situés sur le robot 200, vers les moyens de communication sans fil 290B situés dans le local, puis interprétés par un sujet humain (un éleveur ou un vétérinaire, par exemple).

Dans une alternative, l'interprétation des paramètres mesurés par le module de mesure 240 et des informations visuelles et sonores collectées par le biais du module d'acquisition 260 peut être effectuée par le biais de moyens de traitement 270 du robot, mettant notamment en oeuvre un troisième microprocesseur 271 et la deuxième mémoire de stockage 272.

Le troisième microprocesseur 271 met en oeuvre un ou plusieurs algorithmes de commande du module de mesure 240 et du module d'acquisition 260, de collecte et de traitement des paramètres mesurés et des informations visuelles et sonores collectées, apte(s) :
- à détecter des anomalies dans les paramètres mesurés (par exemple lorsque les valeurs mesurées sortent de plages de valeurs prédéterminées), et/ou
- à cartographier les volailles mortes et/ou les oeufs au sol, et
- à générer une alarme dans le cas où une situation anormale est détectée (suspicion d'épidémie, de maladie, dysfonctionnement de l'installation d'élevage...) qui est transmise vers le local 140, puis interprétée (confirmée ou infirmée) par un sujet humain.

Par ailleurs, le robot 200 peut être adapté pour distribuer des grains de maïs tout au long de ses déplacements dans la zone de vie 110 de façon à rendre moins pénible le travail de l'éleveur et faire en sorte que les volailles participent à l'entretien des sols.

En fonction de la surface de la zone de vie 110, plusieurs robots conformes à l'invention peuvent être mis en oeuvre dans la zone de vie de façon à déranger les volailles à une fréquence permettant d'améliorer leur fertilité et de diminuer la ponte au sol.

Le robot conforme à l'invention est compact et présente, par exemple, une hauteur de 20 cm ce qui lui permet de se déplacer notamment sous les systèmes d'alimentation (mangeoires, abreuvoirs,...).

Il peut être utilisé dans tout type d'élevage avicole (volailles, poulets, dindes, oies, canards), en intérieur ou en extérieur.

En variante, le robot 200 peut être équipé d'un dispositif de vision nocturne, tel qu'une caméra thermique (autrement appelée caméra infrarouge) afin de détecter la présence d'éventuels prédateurs dans le cas d'un élevage en extérieur. Les informations visuelles collectées de nuit par la caméra thermique peuvent être stockées dans la mémoire de stockage 272, et transmises par le biais des moyens de communication 290A sans fil situés sur le robot 200 vers les moyens de communication sans fil 290B situés dans le local 140. Ces informations peuvent être interprétées par un sujet humain (un éleveur ou un vétérinaire, par exemple), ou bien par le robot 200 par le biais d'un algorithme de reconnaissance de formes exécuté par le troisième microprocesseur 271.

En cas de détection d'un prédateur par le robot 200, un signal d'alarme est transmis à l'éleveur ou au vétérinaire situé dans le local 140 grâce aux moyens de communication 290A, 290B.

Dans un mode de réalisation particulier, lorsque le niveau de charge des batteries 203 du robot 200 passe en-dessous d'un seuil prédéterminé, un signal d'alarme est émis vers le local 140 grâce aux moyens de communication 290A, 290B afin de prévenir l'éleveur ou le vétérinaire de la nécessité de recharger les batteries 203.

En variante, les moyens de guidage et de navigation 280 peuvent être programmés pour piloter le robot 200 vers une borne de rechargement située dans le bâtiment d'élevage 100 lorsque le niveau de charge des batteries passe en-dessous d'un seuil prédéterminé. Une fois les batteries 203 rechargées, le robot 200 peut poursuivre sa course le long de la trajectoire 130.

La trajectoire 130 du robot 200 peut être préprogrammée par un sujet humain dans les moyens de traitement 270. Le robot 200 suit cette trajectoire 130 dans la mesure du possible, sauf en cas de détection d'un obstacle, mobile ou fixe, qu'il contourne avant de reprendre sa course le long de la trajectoire 130.

Le sujet humain pourra notamment modifier à distance cette trajectoire 130 depuis le local 140 grâce aux moyens de communication 290A, 290B.

Alternativement, la trajectoire peut être modifiée, voire entièrement déterminée par le robot 200 lui-même en temps réel grâce aux moyens de traitement 270, en fonction, par exemple, d'informations visuelles issues du module d'acquisition 260 qui révèleraient la présence d'une ou de plusieurs volailles qui seraient statiques.

Le robot 200 peut également transmettre, de façon périodique ou à la demande d'un sujet humain, un historique d'activité permettant d'assurer un suivi à distance de l'activité du robot 200 sur de longues périodes (une journée ou une semaine par exemple).

L'historique d'activité peut comprendre le détail des trajets suivis par le robot 200, des relevés de mesures provenant des capteurs environnementaux 241 et physiologiques 242, des prises de vue de la zone de vie 110 à des instants donnés obtenues par l'appareil de prise de vue 261, la cartographie des volailles mortes et/ou des oeufs présents au sol, un relevé des signaux d'alarme émis, ainsi qu'un historique du niveau de charge des batteries 203 du robot 200.

On peut prévoir un unique microprocesseur ainsi qu'une unique mémoire de stockage pour assurer la fonction des trois microprocesseurs 231, 271, 285 et des trois mémoires de stockage 232, 272, 286, respectivement. Dans ce cas, les signaux des capteurs sont adressés à l'unique microprocesseur qui pilote, à partir des signaux reçus, à la fois les mouvements des roues du robot, les moyens d'incitation à la mobilité, le module de mesure et le module d'acquisition.

Les moyens de géolocalisation 284 du robot 200 permettent de déterminer la position précise du robot 200 au sein de la zone de vie 110 et de s'assurer que la trajectoire du robot 200 respecte le plus précisément possible la trajectoire théorique programmée. Ceci permet en outre de fournir, lors de la cartographie, une position précise des volailles mortes et/ou des oeufs présents au sol et/ou des paramètres environnementaux.

Les disques 302 du module de ramassage des oeufs 300 sont de préférence réalisés dans un matériau souple, notamment en métal (éventuellement ajourés pour limiter leur rigidité) revêtus ou non d'un plastique ou élastomère ou en plastique, revêtu ou non d'un élastomère.

L'utilisation de matériaux souples permet de garantir l'intégrité structurelle de l'œuf et ce, quelle que soit sa dimension.

Dans un mode de réalisation particulier du module de ramassage des oeufs 300, le bac de stockage 301 est situé à l'avant du module 300. Dans ce cas, il est nécessaire de placer les doigts d'extraction 306 à l'avant des disques 302.

En variante, il est également envisageable d'équiper le module de ramassage des oeufs 300 d'un capteur pour déterminer la présence d'oeufs dans le bac de stockage 301 et s'il est apte à stocker un ou plusieurs oeufs supplémentaires ou si le robot 200 doit aller vider le bac de stockage 301.

Un ou plusieurs capteurs peuvent également être prévus pour détecter la présence d'oeufs entre les disques et/ou sur le sol et/ou dans le bac de stockage.

## Revendications

1. Robot (200) mobile d'éducation pour un élevage avicole (100) comprenant au moins une zone de ponte (120), ledit robot (200) comprenant un châssis principal (201) portant :
- des moyens de déplacement du robot sur le sol,
- des moyens d'incitation à la mobilité (220) des volailles d'au moins deux types distincts pour repousser les volailles présentes au sol vers au moins une zone de ponte (120),
- des moyens de commande (230) desdits moyens d'incitation à la mobilité (220), le châssis principal (201) dudit robot (200) étant apte à être relié de façon démontable à un châssis secondaire (201') tracté portant des moyens mécaniques (250) de nivellement et d'aération du sol, ledit robot (200) étant **caractérisé en ce que** les moyens de commande (230) sont programmés pour actionner les moyens d'incitation à la mobilité (220) des volailles selon des séquences successives d'activation qui ne sont pas identiques de façon à éviter que les volailles ne s'habituent à la présence du robot (200).

2. Robot (200) selon la revendication 1, **caractérisé en ce qu'**il comprend un module de ramassage des oeufs au sol (300).

3. Robot (200) selon la revendication 2, **caractérisé en ce que** ledit module de ramassage des oeufs au sol (300) comprend une pluralité de disques (302) de préhension des oeufs au sol disposés coaxialement.

4. Robot (200) selon la revendication 3, **caractérisé en ce que** les disques (302) sont motorisés et destinés à être situé à distance du sol.

5. Robot (200) selon la revendication 3 ou 4, **caractérisé en ce que** ledit module de ramassage des oeufs au sol (300) comprend des éléments de guidage (304) des oeufs vers lesdits disques (302) de préhension.

6. Robot (200) selon l'une des revendications 2 à 5, **caractérisé en ce que** ledit module de ramassage des oeufs au sol (300) comprend un bac de stockage (301) des oeufs présentant une paroi de fond (301A) inclinée.

7. Robot (200) selon la revendication 6, **caractérisé en ce que** ledit module de ramassage des oeufs au sol (300) comprend, entre deux disques (302) de préhension adjacents, au moins un doigt d'extraction (306) d'un oeuf situé entre les deux disques (302) de préhension vers ledit bac de stockage (301).

8. Robot (200) selon l'une des revendications 3 à 7, **caractérisé en ce que** ledit module de ramassage des oeufs au sol (300) comprend, entre deux disques (302) de préhension adjacents, au moins un doigt de retenue (305) d'un oeuf entre les deux disques (302) de préhension.

9. Robot (200) selon l'une des revendications 1 à 8, **caractérisé en ce que** lesdits moyens d'incitation à la mobilité (220) sont choisis parmi :
- au moins une source sonore (221) ;
- au moins une source lumineuse (222) ;
- au moins un élément mobile mécanique (223) ;
- au moins un dispositif de décharge électrique (224).

10. Robot (200) selon l'une des revendications 1 à 9, **caractérisé en ce qu'**il comprend des moyens de géolocalisation (284) du robot (200).

11. Robot (200) selon l'une des revendications 1 à 10, **caractérisé en ce qu'**il comprend des capteurs de mesure (241) de paramètres environnementaux dudit élevage avicole (100).

12. Robot (200) selon l'une des revendications 1 à 11, **caractérisé en ce qu'**il comprend des capteurs de mesure (242) de paramètres physiologiques des volailles dudit élevage avicole (100), tels que la température corporelle.

13. Robot (200) selon l'une des revendications 1 à 12, **caractérisé en ce qu'**il comprend des capteurs d'acquisition (260) d'informations visuelles et/ou sonores.

14. Robot (200) selon la revendication 13, **caractérisé en ce qu'**il comprend des moyens de traitement (270) d'au moins un parmi :
- les paramètres physiologiques mesurés,
- les informations visuelles acquises, et
- les informations sonores acquises,
les moyens de traitement (270) étant aptes à délivrer une cartographie des volailles mortes et/ou des oeufs pondus au sol.

15. Robot (200) selon la revendication 14, **caractérisé en ce que** les moyens de traitement (270) sont aptes à délivrer une cartographie des paramètres environnementaux dudit élevage avicole (100) en fonction des paramètres environnementaux mesurés.

16. Installation d'élevage avicole comprenant au moins un robot (200) selon l'une des revendications 1 à 15.

## Patentansprüche

1. Beweglicher Erziehungsroboter (200) für eine Geflügelzucht (100), die mindestens einen Legebereich (120) umfasst, wobei der Roboter (200) ein Hauptfahrgestell (201) umfasst, das Folgendes trägt:
- Mittel zum Fortbewegen des Roboters auf dem Boden,
- Mittel (220) mindestens zweier verschiedener Typen zum Anreizen des Geflügels zur Bewegung, um das Geflügel, das sich auf dem Boden befindet, in Richtung mindestens eines Legebereichs (120) zurückzudrängen,
- Mittel (230) zum Steuern der Bewegungsanreizmittel (220),
wobei das Hauptfahrgestell (201) des Roboters (200) lösbar mit einem gezogenen sekundären Fahrgestell (201') verbunden werden kann, das mechanische Mittel (250) zum Ebnen und zum Belüften des Bodens trägt,
wobei der Roboter (200) **dadurch gekennzeichnet ist, dass** die Steuermittel (230) so programmiert sind, dass sie die Mittel (220) zum Anreizen des Geflügels zur Bewegung nach aufeinanderfolgenden Aktivierungssequenzen betätigen, die nicht identisch sind, um zu verhindern, dass sich das Geflügel an die Anwesenheit des Roboters (200) gewöhnt.

2. Roboter (200) nach Anspruch 1, **dadurch gekennzeichnet, dass** er ein Modul (300) zum Aufsammeln der Eier am Boden umfasst.

3. Roboter (200) nach Anspruch 2, **dadurch gekennzeichnet, dass** das Modul (300) zum Aufsammeln der Eier am Boden eine Vielzahl von koaxial angeordneten Scheiben (302) zum Aufnehmen der Eier am Boden umfasst.

4. Roboter (200) nach Anspruch 3, **dadurch gekennzeichnet, dass** die Scheiben (302) motorgetrieben und dazu bestimmt sind, sich in Abstand vom Boden zu befinden.

5. Roboter (200) nach Anspruch 3 oder 4, **dadurch gekennzeichnet, dass** das Modul (300) zum Aufsammeln der Eier am Boden Elemente (304) zum Führen der Eier in Richtung der Aufnahmescheiben (302) umfasst.

6. Roboter (200) nach einem der Ansprüche 2 bis 5, **dadurch gekennzeichnet, dass** das Modul (300) zum Aufsammeln der Eier am Boden eine Wanne (301) zum Aufbewahren der Eier umfasst, die eine geneigte Bodenwand (301A) aufweist.

7. Roboter (200) nach Anspruch 6, **dadurch gekennzeichnet, dass** das Modul (300) zum Aufsammeln der Eier am Boden zwischen zwei benachbarten Aufnahmescheiben (302) mindestens einen Finger (306) zum Herausbefördern eines sich zwischen den zwei Aufnahmescheiben (302) befindenden Eies in Richtung der Aufbewahrungswanne (301) umfasst.

8. Roboter (200) nach einem der Ansprüche 3 bis 7, **dadurch gekennzeichnet, dass** das Modul (300) zum Aufsammeln der Eier am Boden zwischen zwei benachbarten Aufnahmescheiben (302) mindestens einen Finger (305) zum Halten eines Eies zwischen den zwei Aufnahmescheiben (302) umfasst.

9. Roboter (200) nach einem der Ansprüche 1 bis 8, **dadurch gekennzeichnet, dass** die Bewegungsanreizmittel (220) ausgewählt sind aus:
- mindestens einer Geräuschquelle (221);
- mindestens einer Lichtquelle (222);
- mindestens einem beweglichen mechanischen Element (223);
- mindestens einer Stromstoßvorrichtung (224).

10. Roboter (200) nach einem der Ansprüche 1 bis 9, **dadurch gekennzeichnet, dass** er Mittel (284) zur geografischen Ortung des Roboters (200) umfasst.

11. Roboter (200) nach einem der Ansprüche 1 bis 10, **dadurch gekennzeichnet, dass** er Sensoren (241) zum Messen von Umweltparametern der Geflügelzucht (100) umfasst.

12. Roboter (200) nach einem der Ansprüche 1 bis 11, **dadurch gekennzeichnet, dass** er Sensoren (242) zum Messen von physiologischen Parametern des Geflügels der Geflügelzucht (100), wie etwa der Körpertemperatur, umfasst.

13. Roboter (200) nach einem der Ansprüche 1 bis 12, **dadurch gekennzeichnet, dass** er Sensoren (260) zum Erfassen von visuellen und/oder Geräuschinformationen umfasst.

14. Roboter (200) nach Anspruch 13, **dadurch gekennzeichnet, dass** er Mittel (270) umfasst zum Verarbeiten von mindestens einem aus:
- den gemessenen physiologischen Parametern,
- den erfassten visuellen Informationen, und
- den erfassten Geräuschinformationen,
wobei die Verarbeitungsmittel (270) eine Kartierung des toten Geflügels und/oder der am Boden gelegten Eier liefern können.

15. Roboter (200) nach Anspruch 14, **dadurch gekennzeichnet, dass** die Verarbeitungsmittel (270) eine Kartierung der Umweltparameter der Geflügelzucht (100) in Abhängigkeit von den gemessenen Umweltparametern liefern können.

16. Geflügelzuchtanlage, die mindestens einen Roboter (200) nach einem der Ansprüche 1 bis 15 umfasst.

## Claims

1. Mobile teaching robot (200) for a poultry farm (100) comprising at least one egg-laying area (120), said robot (200) comprising a main frame (201) carrying:
- means for moving the robot on the ground,
- means (220) of at least two distinct types for prompting mobility in order to push the poultry birds present on the ground towards at least one egg-laying area (120),
- means (230) for controlling said means (220) for prompting mobility,
the main frame (201) of said robot (200) being able to be detachably connected to a towed secondary frame (201') carrying mechanical means (250) for levelling and aerating the ground,
said robot (200) being **characterised in that** the control means (230) are programmed to actuate the means (220) for prompting mobility of the poultry birds according to successive activation sequences that are not identical so as to avoid the poultry birds becoming accustomed to the presence of the robot (200).

2. Robot (200) according to claim 1, **characterised in that** it comprises a module (300) for collecting eggs on the ground.

3. Robot (200) according to claim 2, **characterised in that** said module (300) for collecting eggs on the ground comprises a plurality of coaxially disposed disks (302) for grasping eggs on the ground.

4. Robot (200) according to claim 3, **characterised in that** the disks (302) are motor-driven and intended to be located at a distance from the ground.

5. Robot (200) according to claim 3 or 4, **characterised in that** said module (300) for collecting eggs on the ground comprises elements (304) for guiding the eggs towards said grasping disks (302).

6. Robot (200) according to one of claims 2 to 5, **characterised in that** said module (300) for collecting eggs on the ground comprises an egg storage tray (301) having an inclined bottom wall (301A).

7. Robot (200) according to claim 6, **characterised in that** said module (300) for collecting eggs on the ground comprises, between two adjacent grasping disks (302), at least one finger (306) for extracting an egg located between the two grasping disks (302) towards said storage tray (301).

8. Robot (200) according to one of claims 3 to 7, **characterised in that** said module (300) for collecting eggs on the ground comprises, between two adjacent grasping disks (302), at least one finger (305) for retaining an egg between the two grasping disks (302).

9. Robot (200) according to one of claims 1 to 8, **characterised in that** said means (220) for prompting mobility are selected from among:
- at least one sound source (221);
- at least one light source (222);
- at least one mechanical movable element (223);
- at least one electrical discharging device (224).

10. Robot (200) according to one of claims 1 to 9, **characterised in that** it comprises means (284) for the geolocation of the robot (200).

11. Robot (200) according to one of claims 1 to 10, **characterised in that** it comprises sensors (241) for measuring environmental parameters of said poultry farm (100) .

12. Robot (200) according to one of claims 1 to 11, **characterised in that** it comprises sensors (242) for measuring physiological parameters of the poultry birds of said poultry farm (100), such as body temperature.

13. Robot (200) according to one of claims 1 to 12, **characterised in that** it comprises sensors (260) for acquiring visual and/or audible information.

14. Robot (200) according to claim 13, **characterised in that** it comprises means (270) for processing at least one among:
- the measured physiological parameters,
- the acquired visual information, and
- the acquired audible information,
the processing means (270) being able to deliver a mapping of dead poultry birds and/or of eggs laid on the ground.

15. Robot (200) according to claim 14, **characterised in that** the processing means (270) are able to deliver a mapping of the environmental parameters of said poultry farm (100) as a function of the measured environmental parameters.

16. Poultry farming facility comprising at least one robot (200) according to one of claims 1 to 15.
